# EUROPEAN PATENT SPECIFICATION

(11) **EP 2 960 567 B1**
(45) Date of publication and mention of the grant of the patent: **25.09.2019**
(21) Application number: 13876032.7
(22) Date of filing: 17.12.2013
(51) Int. Cl.: F16S 1/10, E04G 9/05, F16S 1/00, F16B 5/02, B29L 31/00

(54) **REINFORCEMENT STRUCTURE FOR STRUCTURAL BODY HAVING FASTENING SECTIONS**
VERSTÄRKUNGSSTRUKTUR FÜR STRUKTURKÖRPER MIT BEFESTIGUNGSABSCHNITTEN
STRUCTURE DE RENFORT POUR CORPS STRUCTUREL AYANT DES SECTIONS DE FIXATION

(30) Priority: 20.02.2013 JP 2013030941
(43) Date of publication of application: 30.12.2015
(73) Proprietor: Toray Industries, Inc., Tokyo 103-8666 (JP)
(72) Inventor: NAKAGOE Hiroaki, Otsu-shi Shiga 520-8558 (JP); YAMAGUCHI Koji, Tokyo 103-8666 (JP); MATSUOKA Hideo, Nagoya-shi Aichi 455-8502 (JP); INOUE Takuya, Otsu-shi Shiga 520-8558 (JP)
(74) Representative: Hoefer & Partner Patentanwälte mbB
(86) International application number: PCT/JP2013/083723
(87) International publication number: WO 2014/129063

(56) References cited:
- JP-A- 2009 208 629
- JP-B2- 4 736 795
- JP-B2- H0 229 129
- JP-Y2- S6 325 247

## Description

### Technical Field of the Invention

The present invention relates to a reinforcement structure for a structural body having fastening sections, and specifically, to a reinforcement structure capable of reinforcing the fastening sections of the structural body and the portions therearound easily without changing the basic structure.

### Background Art of the Invention

Structural bodies having fastening sections are used in various fields, and in those structural bodies, it is frequently required to reinforce the fastening sections and the portions therearound. For example, for reduction of a weight of a vehicle, it is being investigated to replace the materials of various vehicle parts such as a crash absorbing member with resins or fiber reinforced composite materials. In case of a structural body comprising such a material, in order to reinforce the fastening sections and the portions therearound, generally a rib structure is frequently provided. However, there is a possibility that the reinforcement of the portions around the fastening sections is not always sufficient only by employing a rib structure designed in consideration of conditions required for molding a structural body (for example, conditions required for mold opening) and other restrictive conditions.

In case of a rib structure in which the reinforcement of the portions around the fastening sections is not sufficient, although there is a case where it can be solved by redesigning the rib structure, there is a case where it is difficult to redesign an effective rib structure from conditions required for molding and other restrictive conditions. If the reinforcement of the portions around the fastening sections is not sufficient, the structural body itself is liable to be fractured from a fastening section in which stress concentration or the like is likely to occur, and there is a case where an undesired fracture mode is raised as a problem.

Generally, various kinds of reinforcement structures for structural bodies having fastening sections are known. For example, Patent document 1 discloses a reinforcement structure wherein a plate-like metal fitting is attached to a container bottom surface so that a carrying container can endure a long-term use. However, this reinforcement structure is not a structure for reinforcing a fastening section itself. Further, the reinforcing member is described as a metal fitting, and the material thereof is limited to a metal.

Further, Patent document 2 discloses a structure for reinforcing fastening sections of port flanges of an intake manifold by connecting them with a reinforcing bracket. In this reinforcement structure, however, the portion to be applied is limited to an intake manifold portion, a reinforcing bushing is disposed inside each bolt hole of a mounting plate, and the structure is formed by connecting and fixing the reinforcing bracket by the site of each bolt head, and therefore, it is not a structure for reinforcing the fastening sections of the structural body themselves.

Patent document JP-A-2009-208629 discloses a reinforcement structure of a vehicle mirror.

### Prior art documents

### Patent documents

Patent document 1: JP-A-2006-123941
Patent document 2: JP-A-2012-207658

### Summary of the Invention

### Problems to be solved by the Invention

Accordingly, an object of the present invention is to provide a reinforcement structure for a structural body having fastening sections capable of reinforcing the fastening sections themselves of the structural body and the portions therearound easily and effectively without changing the basic structure such as a rib structure of the structural body, in particular, a structure suitable for reinforcement of a structural body comprising a fiber reinforced composite material.

### Means for solving the Problems

To achieve the above-described object, a reinforcement structure for a structural body having fastening sections according to the present invention, the structural body having a plurality of fastening sections for fixing a structural body main body, is characterized in that a reinforcement body, which is provided with reinforcement sections which are provided around at least a part of the fastening sections and connection sections which connect the reinforcement sections to each other, and which is formed separately from the structural body main body with either a material same as that of the structural body main body or a material having a higher elastic modulus or strength than that of the structural body main body, is attached to the structural body main body.

In such a reinforcement structure for a structural body having fastening sections according to the present invention, the reinforcement body, which is provided with reinforcement sections which are provided around the fastening sections and connection sections which connect the reinforcement sections to each other, and which is formed with either a material same as that of the structural body main body or a material having a higher elastic modulus or strength than that of the structural body main body, is attached to the structural body main body. Namely, the predetermined reinforcement body is attached later to the structural body main body. Because of later attachment, even in case where the structural body main body is manufactured by molding, it is not necessary to particularly change the direction for mold opening and the like, and also with respect to the shape over the whole of the structural body main body and the like, it is not necessary to greatly change it as compared with a case where the reinforcement body is not additionally attached later, and therefore, the later attachment of the reinforcement body can be easily carried out. Further, since the reinforcement sections of the reinforcement body are provided around the fastening sections and the reinforcement sections are connected to each other via the connection sections, eventually, a formation, equal to that where the fastening sections of the structural body main body are connected to each other via the reinforcement body, can be achieved, and loads applied to the respective fastening sections are distributed or supported by each other through the connection sections. As a result, a load applied to individual fastening section itself or the portion therearound is reduced, consequently that individual section or portion is reinforced, and ultimately, the whole of the structural body is reinforced. Since this reinforcement of the structural body is achieved by the later attachment of the reinforcement body as described above, a desired reinforcement is carried out easily, effectively and efficiently.

In the above-described reinforcement structure for a structural body having fastening sections according to the present invention, the structural body main body has a main body rib for reinforcing the structural body main body. Namely, the structural body main body originally has a reinforcement structure due to the main body rib, and applying the present invention, the fastening sections liable to be fractured can be effectively and efficiently reinforced by the above-described later attachment of the reinforcement body.

As a material for forming a member used in the structural body having fastening sections according to the present invention, a material including a resin, in particular, a material including a thermoplastic resin, can be exemplified. As preferable thermoplastic resin materials, can be exemplified polyolefines such as polyethylene (PE), polypropylene (PP) and polybutylene, styrene-based resins, and other than these resins, polyesters such as polyethylene terephthalate (PET), polybutylene terephthalate (PBT), polytrimethylene terephthalate (PTT), polyethylene naphthalate (PEN) and liquid crystal polyesters, polyoxymethylene (POM), polyamide (PA), polycarbonate (PC), polymethylene methacrylate (PMMA), polyvinyl chloride (PVC), polyphenylene sulfide (PPS), polyphenylene ether (PPE), modified PPE, polyimide (PI), polyamideimide (PAI), polyetherimide (PEI), polysulfone (PSU), modified PSU, polyethersulfone (PES), polyketone (PK), polyetherketone (PEK), polyetheretherketone (PEEK), polyetherketoneketone (PEKK), polyarylate (PAR), polyether nitrile (PEN), phenolic-based resins, phenoxy resin, fluorine-based resins such as polytetrafluoroethylene, and further, polystyrene-based, polyolefin-based, polyurethane-based, polyester-based, polyamide-based, polybutadiene-based, polyisoprene-based and fluorine-based thermoplastic elastomers, and copolymers and modified polymers thereof, and a resin blended with two or more kinds thereof, may be employed. In particular, from the viewpoint of high elongation, PC resins, ABS resins and blended materials thereof are preferably used, and from the viewpoint of high strength, polyamide resins and blended materials thereof are preferably used.

Further, in the present invention, it is preferred that, in the above-described reinforcement body, two or more connection sections are connected to at least one reinforcement section. In such a structure, because a load applied to one fastening section is transmitted from the reinforcement section corresponding to the fastening section to the interior of the reinforcement body through two or more connection sections, the load applied to the fastening section is adequately distributed, and consequently, reduction of a load applied to one fastening section becomes possible, and therefore, more effective reinforcement of fastening sections becomes possible.

Further, in the above-described reinforcement body, in case where two or more connection sections are connected to at least one reinforcement section, it is preferred to employ a formation wherein the respective connection sections of the two or more connection sections extend from the at least one reinforcement section in directions different from each other. In such a formation, the above-described distribution of the load applied to the fastening section is performed more efficiently. Where, even in case where relatively to one reinforcement section, two connection sections are disposed linearly at positions of the reinforcement section opposite to each other, these connection sections can function at least to adequately transmit a load in the reinforcement body attached later in order to reinforce the whole of the structural body.

Further, in the above-described reinforcement body, it is also preferred to employ a formation wherein all the reinforcement sections and all the connection sections are formed integrally. By the integral formation of the whole of the reinforcement body, the integral molding of the reinforcement body itself becomes easy, and in addition, the load transmission in the reinforcement body can be performed at a more desirable condition.

Further, it is preferred that the structural body main body and the reinforcement body are formed by molding them separately from each other. Although the reinforcement body may have a formation to be attached later to the structural body main body, by molding them separately from each other, the manufacture of the reinforced structural body as a whole becomes easy.

According to the invention, the reinforcement body is attached at a site opposite to a site of a root of the main body rib in the structural body main body. In such a formation, it becomes possible to attach the reinforcement body later to the structural body main body extremely easily.

According to the invention, a groove for attaching the reinforcement body is formed on the above-described main body rib in the structural body main body. In such a structure, it becomes possible to easily attach the reinforcement body to the structural body main body while positioning it at a predetermined position.

Moreover, the reinforcement structure for a structural body having fastening sections according to the present invention is effective particularly in case where the structural body main body or the reinforcement body, or both thereof, are formed with a fiber reinforced composite material. Since a structure using a fiber reinforced composite material is employed usually for the purposes of improvement of strength and rigidity as well as lightening in weight, by applying it to the reinforcement structure according to the present invention, the whole structure of a targeted desirable structural body can be easily realized.

For example, can be employed a structure wherein the structural body main body or the reinforcement body, or both thereof, are formed with a carbon fiber composite material, or a structure wherein the structural body main body or the reinforcement body, or both thereof, are formed with a glass fiber composite material. Of course, a structure formed with a fiber reinforced composite material using other reinforcing fibers or a fiber reinforced composite material using two or more kinds of reinforcing fibers can be employed.

Where, in case where the structural body main body or the reinforcement body, or both thereof, are formed with a fiber reinforced composite material as described above, although any of a thermoplastic resin and a thermosetting resin can be used as the matrix resin, preferably a thermoplastic resin is used from the viewpoint of easiness of molding. As a usable thermoplastic resin, for example, at least one selected from the group consisting of polyamide, polyphenylene sulfide, polypropylene, polycarbonate, polyetheretherketone and polyetherimide can be exemplified.

Furthermore, in the present invention, it is also possible to employ a structure wherein the structural body main body or the reinforcement body, or both thereof, are formed with a resin or a structure wherein the structural body main body or the reinforcement body, or both thereof, are formed with a metal.

### Effect according to the Invention

Thus, in the reinforcement structure for a structural body having fastening sections according to the present invention, only by attaching the reinforcement body later, it becomes possible to easily reinforce the fastening sections themselves of the structural body main body and the portions therearound effectively without changing the basic structure such as a rib structure of the structural body main body. The present invention can provide a structure suitable, in particular, to reinforcement for a structural body comprising a fiber reinforced composite material including a carbon fiber composite material or a glass fiber composite material.

### Brief explanation of the drawings

Fig. 1 is a perspective view of a structural body base main body before applied with the present invention.
Fig. 2 is a perspective view partially shown as a sectional view of the structural body base main body depicted in Fig. 1.
Fig. 3 is a perspective view of a reinforcement structure for a structural body having fastening sections according to an embodiment of the present invention in case where the present invention is applied to the structural body base main body depicted in Fig. 1.
Fig. 4 is a perspective view of a reinforcement body in the structure depicted in Fig. 3.
Fig. 5 is a perspective view of a structural body main body in the structure depicted in Fig. 3.
Fig. 6 is a perspective view of a reinforcement body according to a modification of Fig. 4.

### Embodiments for carrying out the Invention

Hereinafter, embodiments of the present invention will be explained referring to figures.

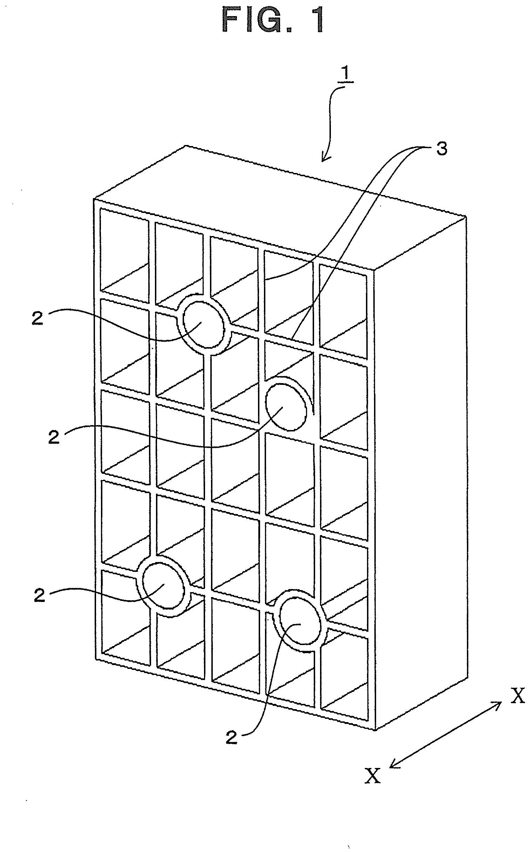

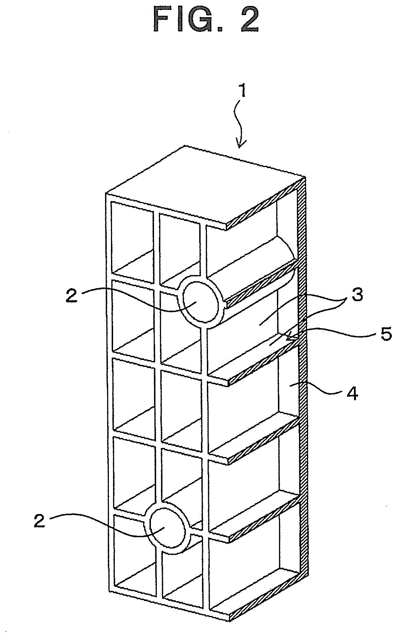

Fig. 1 shows a structural body base main body before applied with the present invention, that is used for the following explanation of embodiments of the present invention. A structural body base main body 1 shown in Fig. 1 has a plurality of (in the embodiment shown in the figure, four) fastening sections 2 with through holes for fixing the structural body base main body 1 to another member, and a plurality of ribs 3 (main body ribs) extending perpendicularly to each other are provided in the structural body base main body 1 over approximately the whole including the fastening sections 2. As shown in Fig. 2, these main body ribs 3 are connected to a rear wall 4, and extend from the site of a root 5, which is a connection portion to the rear wall 4, to the front surface side of structural body base main body 1. Further, this structural body base main body 1 is formed with a fiber reinforced composite material, in particular, with a carbon fiber composite material, and the whole is integrally molded. By setting the direction for mold opening at the time of molding at a direction X-X shown in the figure, the integral molding of the whole and the mold opening after molding can be carried out easily.

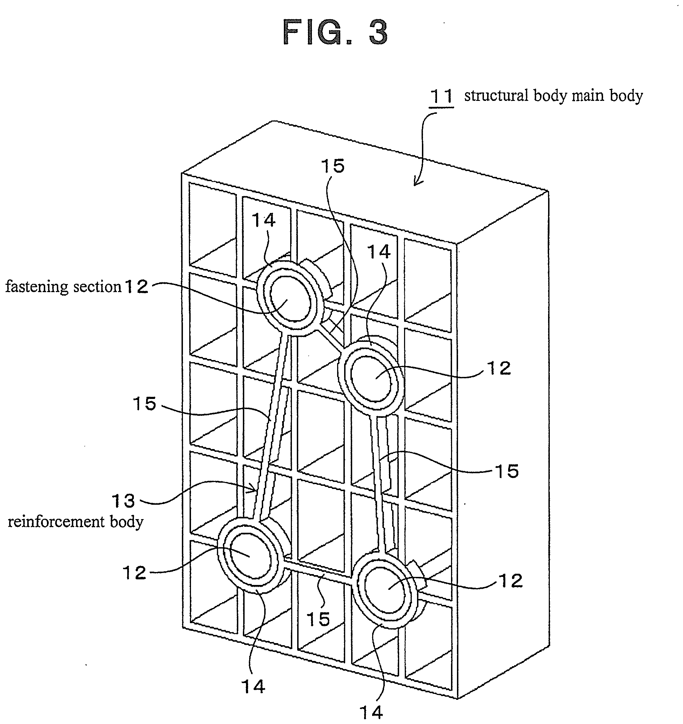

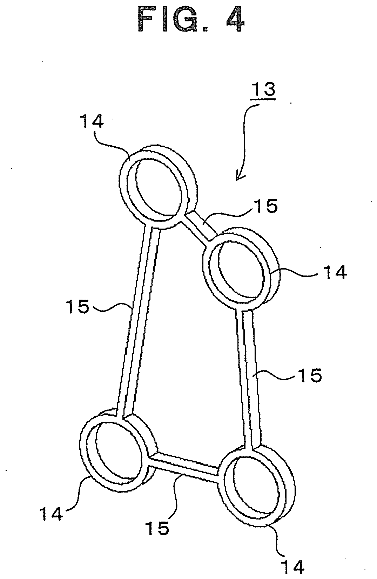

Fig. 3 shows a reinforcement structure for a structural body having fastening sections according to an embodiment of the present invention in case where the present invention is applied to structural body base main body 1 depicted in Fig. 1. In the structure shown in Fig. 3, similarly to that shown in Fig. 1, the structural body has a plurality of (in this embodiment, four) fastening sections 12 for fixing a structural body main body 11. In this embodiment, this structural body main body 11 is formed with a fiber reinforced composite material, in particular, with a carbon fiber composite material, and integrally molded as a whole. To this structural body main body 11, a reinforcement body 13, which is formed separately from the structural body main body 11 with either a material same as that of the structural body main body 11 or a material having a higher elastic modulus or strength than that of the structural body main body 11, is attached for reinforcing the structural body main body 11. As shown also in Fig. 4, this reinforcement body 13 is provided with reinforcement sections 14 which are provided around at least a part of (in this embodiment, all of) fastening sections 12 and connection sections 15 which connect the reinforcement sections 14 (two reinforcement sections 14) to each other, and integrally molded as a whole.

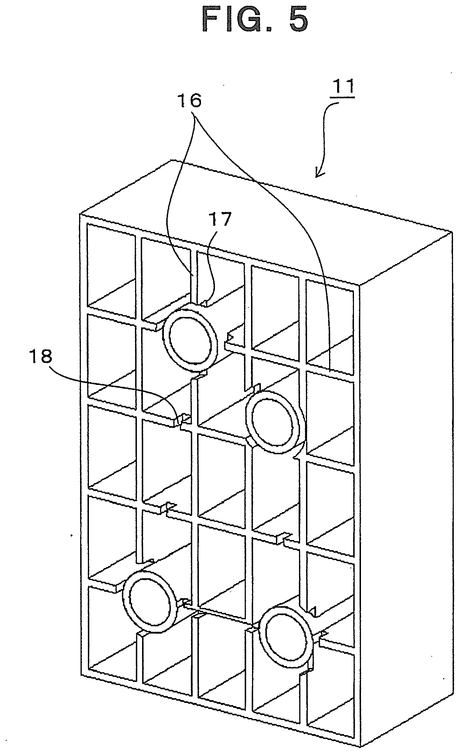

In structural body main body 11, as shown also in Fig. 5, main body ribs 16 extending perpendicularly to each other are integrally formed therein. The above-described reinforcement body 13 is attached at a site opposite to a site of the roots of main body ribs 16 in structural body main body 11 (the rear side in Figs. 3 and 5 and the side similar to the side of root 5 shown in Fig. 2). In this case, grooves for attaching reinforcement body 13 are formed on main body ribs 16 in structural body main body 11, and as these grooves, grooves 17 for the respective reinforcement sections 14 of the reinforcement body 13 and grooves 18 for the respective connection sections 15 are both formed. By fitting reinforcement body 13 into these grooves 17 and grooves 18, as shown in Fig. 3, the whole of the reinforcement body 13 is attached to structural body main body 11at a predetermined position.

In the structure according to the above-described embodiment, as understood from the comparison between Fig. 1 and Fig. 5, structural body main body 11 can be obtained without substantially changing the basic structure of structural body base main body 1, in particular, without changing the disposition of ribs 3 provided in structural body base main body 1. To the structural body main body 11 thus obtained, reinforcement body 13 formed with the above-described predetermined material can be attached by later attachment. Therefore, even in case where the whole of structural body main body 11 is integrally molded for example, it is not necessary to particularly change the direction of mold opening and the like, and also with respect to the shape over the whole of the structural body main body 11, it is not necessary to be greatly changed, as compared with a case where reinforcement body 13 is not provided. Then, by the structure wherein reinforcement body 13 has reinforcement sections 14 which are provided around fastening sections 12 and connection sections 15 which connect the reinforcement sections 14 to each other, a formation, equal to a formation wherein the fastening sections 12 of structural body main body 11 are connected to each other via the reinforcement body 13, can be achieved, a load applied to a certain one fastening section 12 is distributed through the connection sections 15 of the reinforcement body 13, and the loads applied to the respective fastening sections 12 are supported by each other through the respective reinforcement sections 14 and the respective connection sections 15. As a result, the load applied to each fastening section 12 itself and the portion therearound can be reduced, consequently each of such portions can be reinforced, and ultimately, the whole of the structural body (the whole of the structural body main body 11) can be reinforced. Since such a reinforcement can be achieved by the later attachment of reinforcement body 13, it can be performed easily, effectively and efficiently.

Furthermore, in the above-described embodiment, in particular, because grooves 17, 18 for the attachment of reinforcement body 13 are formed in structural body main body 11, the reinforcement body 13 can be attached to the structural body main body 11 accurately in position and easily from a predetermined direction. By that, a desirable reinforcement structure for a structural body can be achieved more easily and securely.

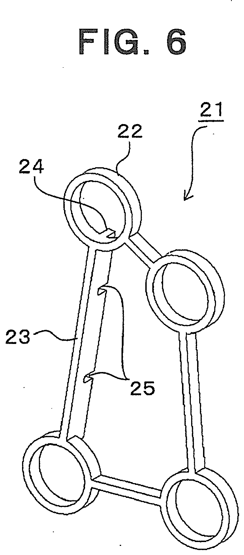

Where, in the above-described embodiment, reinforcement body 13 can employ various formations. For example, as shown in Fig. 6 with a reinforcement body 21 according to modification of Fig. 4, it is possible to add a device for further enhancing the reinforcement effect to at least a part of reinforcement sections 22 or connection sections 23. In the example shown in the figure, to one reinforcement section 22, an additional rib 24 is provided at a portion which does not interfere with main body rib 16 of structural body main body 11 (shown in Fig. 5), and in particular, while this reinforcement section 22 makes the groove, provided in the side of the structural body main body 11 for fitting reinforcement body 21, small as much as possible, particularly this reinforcement section 22 is reinforced, and therefore, the reinforcement effect due to the reinforcement body 21 is enhanced. It is possible to apply a similar structure also to the other reinforcement sections. Further, in the example shown in the figure, the height of one connection section 23 is set higher than that shown in Fig. 4, and in particular, this connection section 23 is reinforced. In this connection section 23, grooves 25, which are fitted with grooves 18 provided in the side of structural body main body 11 (shown in Fig. 5) with each other, are formed, and this connection section 23 is reinforced without particularly making the grooves 18 provided in the side of the structural body main body 11 greater. It is possible to apply a similar structure also to the other connection sections. Thus, it is possible to add appropriate devices to the respective portions of the reinforcement body.

### Industrial Applicability

Although the reinforcement structure for a structural body having fastening sections according to the present invention can be applied also to a structural body made of a resin or a metal, it is a structure suitable for reinforcement of a structural body, in particular, made of a fiber reinforced composite material such as a carbon fiber composite material or a glass fiber composite material.

### Explanation of symbols

1: structural body base main body
11: structural body main body
2, 12: fastening section
13, 21: reinforcement body
14, 22: reinforcement section
15, 23: connection section
3, 16: main body rib
17, 18: groove
24: additional rib
25: rib

## Claims

1. A reinforcement structure including
a structural body having a structural body main body (11) and a plurality of fastening sections(12) for fixing said structural body main body (11), and
a reinforcement body (13), which is provided with reinforcement sections (14, 22) which are provided around at least a part of said fastening sections (12) and connection sections (15, 23) which connect said reinforcement sections (14, 22) to each other, and said reinforcement body (13) being formed separately from said structural body main body (11) with either a material same as that of said structural body main body (11) or a material having a higher elastic modulus or strength than that of said structural body main body (11), said reinforcement body (13) being attached to said structural body main body (11), wherein
said structural body main body (11) has a main body rib (16) for reinforcing said structural body main body (11), wherein
said reinforcement body (13) is attached at a site opposite to a site of a root of said main body rib (16) in said structural body main body (11), **characterised in that**
a groove (17, 18) for attaching said reinforcement body (13) is formed on said main body rib (16) of said structural body main body (11).

2. The reinforcement structure according to claim 1, wherein in said reinforcement body (13), two or more connection sections (15, 23) are connected to at least one reinforcement section (14, 22).

3. The reinforcement structure according to claim 1 or 2, wherein in said reinforcement body (13), two or more connection sections (15, 23) are connected to at least one reinforcement section (14, 22) and respective connection sections (15, 23) of said two or more connection sections (15, 23) extend from said at least one reinforcement section (14, 22) in directions different from each other.

4. The reinforcement structure according to any of claims 1 to 3, wherein in said reinforcement body (13), all said reinforcement sections (14, 22) and all said connection sections (15, 23) are formed integrally.

5. The reinforcement structure according to any of claims 1 to 4, wherein said structural body main body (11) and said reinforcement body (13) are molded separately from each other.

6. The reinforcement structure according to any of claims 1 to 5, wherein said structural body main body (11) or said reinforcement body (13), or both thereof, are formed with a carbon fiber composite material.

7. The reinforcement structure according to any of claims 1 to 5, wherein said structural body main body (11) or said reinforcement body (13), or both thereof, are formed with a glass fiber composite material.

8. The reinforcement structure according to any of claims 1 to 5, wherein said structural body main body (11) or said reinforcement body (13), or both thereof, are formed with a resin.

9. The reinforcement structure according to any of claims 1 to 5, wherein said structural body main body (11) or said reinforcement body (13), or both thereof, are formed with a metal.

## Patentansprüche

1. Verstärkungsstruktur, umfassend
einen Strukturkörper mit einem Strukturkörperhauptkörper (11) und einer Vielzahl an Befestigungsabschnitten (12) zum Befestigen des Strukturkörperhauptkörpers (11), und einen Verstärkungskörper (13), der mit Verstärkungsabschnitten (14, 22) versehen ist, die um mindestens einen Teil der Befestigungsabschnitte (12) und Verbindungsabschnitte (15, 23), die die Verstärkungsabschnitte (14, 22) miteinander verbinden, vorgesehen sind, und
wobei der Verstärkungskörper (13) getrennt von dem Strukturkörperhauptkörper (11) entweder aus dem gleichen Material wie der Strukturkörperhauptkörper (11) oder aus einem Material mit einem höheren Elastizitätsmodul oder einer höheren Festigkeit als der des Strukturkörperhauptkörpers (11) gebildet ist,
wobei der Verstärkungskörper (13) an dem Strukturkörperhauptkörper (11) angebracht ist,
wobei der Strukturkörperhauptkörper (11) eine Hauptkörperrippe (16) zum Verstärken des Strukturkörperhauptkörpers (11) hat,
wobei der Verstärkungskörper (13) an einer Stelle gegenüber einer Stelle eines Ansatzes der Hauptkörperrippe (16) in dem Strukturkörperhauptkörper (11) angebracht ist, **dadurch gekennzeichnet, dass**
eine Nut (17, 18) zum Anbringen des Verstärkungskörpers (13) an der Hauptkörperrippe (16) des Strukturkörperhauptkörpers (11) ausgebildet ist.

2. Verstärkungsstruktur nach Anspruch 1, wobei in dem Verstärkungskörper (13) zwei oder mehr Verbindungsabschnitte (15, 23) mit mindestens einem Verstärkungsabschnitt (14, 22) verbunden sind.

3. Verstärkungsstruktur nach Anspruch 1 oder 2, wobei in dem Verstärkungskörper (13) zwei oder mehr Verbindungsabschnitte (15, 23) mit mindestens einem Verstärkungsabschnitt (14, 22) verbunden sind, und sich jeweilige Verbindungsabschnitte (15, 23) der zwei oder mehr Verbindungsabschnitte (15, 23) von dem mindestens einen Verstärkungsabschnitt (14, 22) aus in voneinander verschiedene Richtungen erstrecken.

4. Verstärkungsstruktur nach einem der Ansprüche 1 bis 3, wobei in dem Verstärkungskörper (13) alle Verstärkungsabschnitte (14, 22) und alle Verbindungsabschnitte (15, 23) einstückig ausgebildet sind.

5. Verstärkungsstruktur nach einem der Ansprüche 1 bis 4, wobei der Strukturkörperhauptkörper (11) und der Verstärkungskörper (13) getrennt voneinander geformt sind.

6. Verstärkungsstruktur nach einem der Ansprüche 1 bis 5, wobei der Strukturkörperhauptkörper (11) oder der Verstärkungskörper (13) oder beide mit einem Kohlefaserverbundmaterial gebildet sind.

7. Verstärkungsstruktur nach einem der Ansprüche 1 bis 5, wobei der Strukturkörperhauptkörper (11) oder der Verstärkungskörper (13) oder beide mit einem Glasfaserverbundmaterial gebildet sind.

8. Verstärkungsstruktur nach einem der Ansprüche 1 bis 5, wobei der Strukturkörperhauptkörper (11) oder der Verstärkungskörper (13) oder beide mit einem Harz gebildet sind.

9. Verstärkungsstruktur nach einem der Ansprüche 1 bis 5, wobei der Strukturkörperhauptkörper (11) oder der Verstärkungskörper (13) oder beide mit einem Metall gebildet sind.

## Revendications

1. Structure de renfort comportant
un corps structural ayant un corps principal de corps structural (11) et une pluralité de sections de fixation (12) pour fixer ledit corps principal de corps structural (11), et
un corps de renfort (13), qui est muni de sections de renfort (14, 22) qui sont prévues autour d'au moins une partie desdites sections de fixation (12) et de sections de liaison (15, 23) qui relient lesdites sections de renfort (14, 22) les unes aux autres, et ledit corps de renfort (13) étant formé séparément dudit corps principal de corps structural (11) soit d'un matériau identique à celui dudit corps principal de corps structural (11), soit d'un matériau ayant un module d'élasticité ou une résistance plus élevé(e) que celui/celle dudit corps principal de corps structural (11), ledit corps de renfort (13) étant attaché audit corps principal de corps structural (11), où
ledit corps principal de corps structural (11) présente une nervure de corps principal (16) pour renforcer ledit corps principal de corps structural (11), où
ledit corps de renfort (13) est attaché au niveau d'un site opposé à un site d'une base de ladite nervure de corps principal (16) dans ledit corps principal de corps structural (11), **caractérisée en ce que**
une rainure (17, 18) pour attacher ledit corps de renfort (13) est formée sur ladite nervure de corps principal (16) dudit corps principal de corps structural (11).

2. Structure de renfort selon la revendication 1, dans laquelle dans ledit corps de renfort (13), deux sections de liaison ou plus (15, 23) sont reliées à au moins une section de renfort (14, 22).

3. Structure de renfort selon la revendication 1 ou 2, dans laquelle dans ledit corps de renfort (13), deux sections de liaison ou plus (15, 23) sont reliées à au moins une section de renfort (14, 22) et des sections de liaison (15, 23) respectivement desdites deux sections de liaison ou plus (15, 23) s'étendent depuis ladite au moins une section de renfort (14, 22) dans des directions différentes les unes des autres.

4. Structure de renfort selon l'une quelconque des revendications 1 à 3, dans laquelle, dans ledit corps de renfort (13), toutes lesdites sections de renfort (14, 22) et toutes lesdites sections de liaison (15, 23) sont formées d'un seul tenant.

5. Structure de renfort selon l'une quelconque des revendications 1 à 4, dans laquelle ledit corps principal de corps structural (11) et ledit corps de renfort (13) sont moulés séparément l'un de l'autre.

6. Structure de renfort selon l'une quelconque des revendications 1 à 5, dans laquelle ledit corps principal de corps structural (11) ou ledit corps de renfort (13), ou les deux, est/sont formé(s) d'un matériau composite à base de fibres de carbone.

7. Structure de renfort selon l'une quelconque des revendications 1 à 5, dans laquelle ledit corps principal de corps structural (11) ou ledit corps de renfort (13), ou les deux, est/sont formé(s) d'un matériau composite à base de fibres de verre.

8. Structure de renfort selon l'une quelconque des revendications 1 à 5, dans laquelle ledit corps principal de corps structural (11) ou ledit corps de renfort (13), ou les deux, est/sont formé(s) d'une résine.

9. Structure de renfort selon l'une quelconque des revendications 1 à 5, dans laquelle ledit corps principal de corps structural (11) ou ledit corps de renfort (13), ou les deux, est/sont formé(s) d'un métal.
